# FASCICULE DE BREVET EUROPEEN

(11) **EP 2 162 323 B1**
(45) Date de publication et mention de la délivrance du brevet: **15.06.2011**
(21) Numéro de dépôt: 08826680.4
(22) Date de dépôt: 30.06.2008
(51) Int. Cl.: B60S 1/50

(54) **RESERVOIR DE LIQUIDE DE LAVAGE POUR VEHICULE AUTOMOBILE**
WASCHFLÜSSIGKEITSTANK FÜR EIN AUTOMOBIL
WASHING LIQUID TANK FOR AUTOMOBILE

(30) Priorité: 11.07.2007 FR 0705015
(43) Date de publication de la demande: 17.03.2010
(73) Titulaire: Tristone Flowtech Solutions (TFS), 44470 Carquefou (FR); Peugeot Citroën Automobiles SA, 78140 Vélizy-Villacoublay (FR)
(72) Inventeur: MEROUR, Sylvain, F-44120 Vertou (FR); GAUDIAU, Ghislain, F-44150 Ancenis (FR); JEUFFE, Gérard, F-78580 Bazemont (FR); MAGNIER, Nicolas, F-92140 Clamart (FR)
(74) Mandataire: Laget, Jean-Loup
(86) Numéro de dépôt international: PCT/FR2008/000930
(87) Numéro de publication internationale: WO 2009/016297

(56) Documents cités:
- DE-A1- 3 704 325
- DE-A1-102005 058 513
- FR-A- 2 419 849
- FR-A- 2 609 437
- FR-A- 2 875 763
- FR-A- 2 884 477

## Description

La présente invention concerne un réservoir de liquide de lavage pour véhicule automobile.

Elle concerne plus particulièrement, un réservoir de liquide de lavage à pulvériser sur des vitres ou projecteurs d'un véhicule automobile, du type pourvu d'une cloison d'extension verticale divisant le réservoir en une première chambre comportant dans sa partie supérieure un orifice de remplissage du liquide, et une deuxième chambre comportant dans sa partie inférieure un orifice de pompage, ladite deuxième chambre présentant une paroi commune à un corps de réchauffage, ladite deuxième chambre s'étendant au moins partiellement autour dudit corps de réchauffage de manière à assurer le réchauffage du liquide contenu dans ladite deuxième chambre, lesdites première et deuxième chambres communiquant l'une avec l'autre par un orifice de communication dans la partie inférieure de ladite cloison afin de permettre le remplissage de ladite deuxième chambre à partir de ladite première chambre.

De manière classique, la projection du liquide de lavage sur le pare-brise ou les projecteurs du véhicule est assurée par un ou plusieurs organes de pulvérisation, du type gicleur, alimentés en liquide de lavage par une pompe d'alimentation depuis un réservoir contenant le liquide de lavage. Le liquide de lavage est habituellement composé d'un mélange d'eau et d'alcool en proportion élevée. En dépit de la présence d'alcool, la qualité de lavage reste médiocre.

Pour améliorer la qualité de lavage, il est connu de réchauffer le liquide de lavage. Le réchauffage du liquide de lavage permet également de diminuer la proportion d'alcool dans le mélange et, ainsi, de contribuer à la préservation de l'environnement.

Comme le rappelle le brevet FR 2 884 477, on connaît des dispositifs lave-vitres dans lesquels le réchauffage du liquide de lavage est réalisé au moyen de résistances électriques chauffantes, placées à divers endroits dans le circuit de lavage (voir les brevets FR 2 855 079, FR 2 763 549, EP 0 456 934, FR 2 419 849 et US 2002/0134857). La présence de résistances électriques accroît la consommation d'énergie du véhicule et nécessite un composant supplémentaire.

Une solution intéressante évitant à la fois une consommation d'énergie supplémentaire et l'adjonction d'autres composants est décrite notamment dans la demande de brevet français FR 2 609 437 et la demande de brevet allemand DE 37 04 325. La demande de brevet FR 2 609 437 et DE 102005058513 proposent un réservoir de liquide de lavage chauffé au contact d'une canalisation véhiculant un fluide chaud. Ces solutions sont peu efficaces en terme de chauffage. DE 37 04 325 propose un réservoir de liquide de lavage dont les moyens de chauffage comprennent une paroi commune, formant surface d'échange thermique, entre le réservoir de liquide de lavage et un vase d'expansion ou boîte de dégazage d'un circuit de liquide de refroidissement du moteur thermique du véhicule.

La demande de brevet FR 2 884 477 estime cette solution, dans laquelle le réservoir de liquide de lavage et le vase d'expansion sont juxtaposés, non satisfaisante du fait que la surface d'échange thermique entre les liquides de refroidissement et de lavage est limitée à une seule face latérale du vase d'expansion, et propose d'intégrer majoritairement le vase d'expansion à l'intérieur du réservoir afin d'augmenter la surface d'échange thermique entre les liquides de refroidissement et de lavage. Cette dernière solution, si elle permet un chauffage satisfaisant du liquide lave-glace, offre l'inconvénient de pénaliser la montée en température du liquide du circuit de refroidissement en raison de déperditions importantes des calories au niveau de la boîte de dégazage vers le réservoir de liquide.

Une autre solution dans laquelle on prélève les calories nécessaires à l'élévation de la température du liquide de lavage contenu dans un réservoir du véhicule logé dans le compartiment moteur de ce véhicule à partir de la boîte de dégazage ou vase d'expansion de son circuit de refroidissement est décrite dans la demande de brevet français FR 2 875 763. Dans cette solution, le réservoir entoure au moins partiellement la boîte de dégazage en ménageant entre eux un espace de séparation d'épaisseur déterminée, dans lequel est intégré un corps creux à double cloison délimitant un volume isolant thermique fermé sur lui-même.

Cette solution vise à ce que le prélèvement de calories s'effectue dans des conditions particulières évitant que la température propre de la boîte de dégazage ne subisse des variations brusques, avec les risques pouvant en découler sur le bon fonctionnement du moteur.

Un but de la présente invention est de proposer un réservoir de liquide de lavage du type précité dont la conception, bien que simplifiée, permet d'atteindre rapidement et de maintenir une température élevée du liquide à projeter à l'intérieur d'une partie dudit réservoir, en évitant, si cela est souhaité, une consommation d'énergie supplémentaire et l'adjonction d'autres composants sans nuire au bon fonctionnement du moteur, la montée en température du liquide de refroidissement n'étant pas pénalisée.

A cet effet, l'invention a pour objet un réservoir de liquide de lavage pour véhicule automobile, le réservoir étant pourvu d'une cloison d'extension verticale divisant le réservoir en une première chambre comportant dans sa partie supérieure au moins un orifice de remplissage du liquide, et une deuxième chambre, comportant dans sa partie inférieure au moins un orifice de pompage, ladite deuxième chambre présentant une paroi commune à un corps de réchauffage, ladite deuxième chambre s'étendant au moins partiellement autour dudit corps de réchauffage de manière à assurer le réchauffage du liquide contenu dans ladite deuxième chambre, lesdites première et deuxième chambres communiquant l'une avec l'autre par un orifice de communication dans la partie inférieure de ladite cloison afin de permettre le remplissage de ladite deuxième chambre à partir de ladite première chambre, caractérisé par le fait que la deuxième chambre présente un volume inférieur à celui de la première chambre et en ce que lesdites première et deuxième chambres communiquent l'une avec l'autre par un passage d'air prévu à la partie supérieure de ladite deuxième chambre de manière à permettre l'échappement d'air de celle-ci vers ladite première chambre lors du remplissage du réservoir.

Grâce à la conception du réservoir à au moins deux chambres, l'une dite froide, l'autre dite chaude, de volume intérieur inférieur comparativement à celui de la chambre froide, en vue du chauffage d'une plus faible quantité de liquide de lavage et à l'absence de débouché de la chambre chaude à l'air libre, on obtient l'efficacité de chauffage recherché. En d'autres termes, le volume intérieur de la deuxième chambre dite chaude est inférieur au volume intérieur de la première chambre dite froide, ce qui permet d'obtenir l'efficacité recherchée. De même, la contenance de la deuxième chambre, dite chaude, est inférieure à la contenance de la première chambre, dite froide.

Selon un mode de réalisation préférée de l'invention, le passage d'air, défini par un canal, est associé à des moyens d'obstruction permettant d'empêcher la circulation de liquide de ladite première chambre vers ladite deuxième chambre par ledit canal.

Ainsi, la présence du passage d'air permet un remplissage aisé et rapide de la deuxième chambre dite chambre chaude par échappement d'air à travers ledit passage et son association avec des moyens d'obstruction permettent d'empêcher une circulation de fluide entre lesdites chambres, circulation qui ne permettrait pas d'obtenir et de maintenir la température recherchée dans la deuxième chambre. Parallèlement, ces moyens d'obstruction empêchent également la circulation de fluide entre lesdites chambres lors d'une forte inclinaison du véhicule ou lors du passage du véhicule sur des obstacles, tels que des "dos d'âne", qui créent des perturbations, appelées mouvements de déjaugeage, à l'intérieur dudit réservoir.

L'invention sera bien comprise à la lecture de la description suivante d'exemples de réalisation, en référence aux dessins annexés dans lesquels :

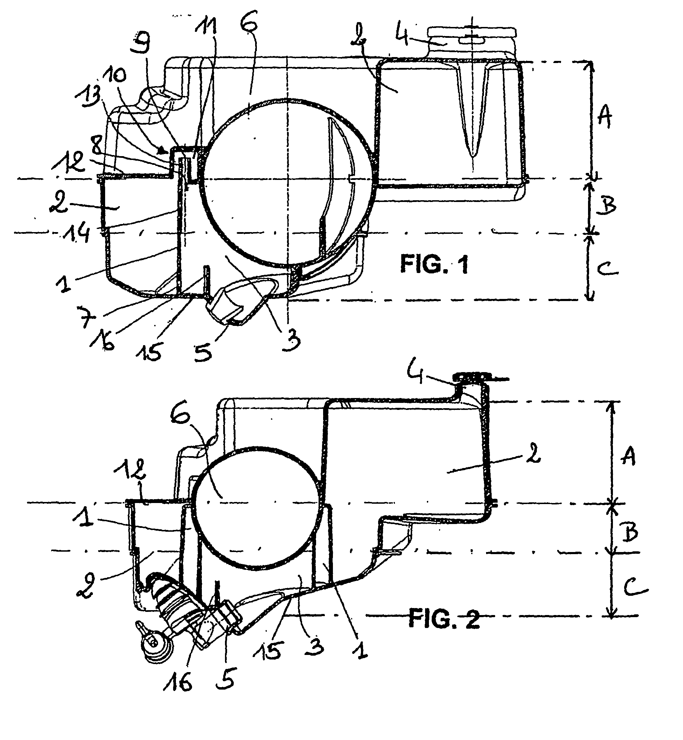

La figure 1 représente une vue en coupe du réservoir de liquide conforme à l'invention prise au niveau du passage d'air prévu à la partie supérieure de la deuxième chambre ;
La figure 2 représente une vue en coupe du réservoir de liquide conforme à l'invention prise au niveau de la double cloison ;

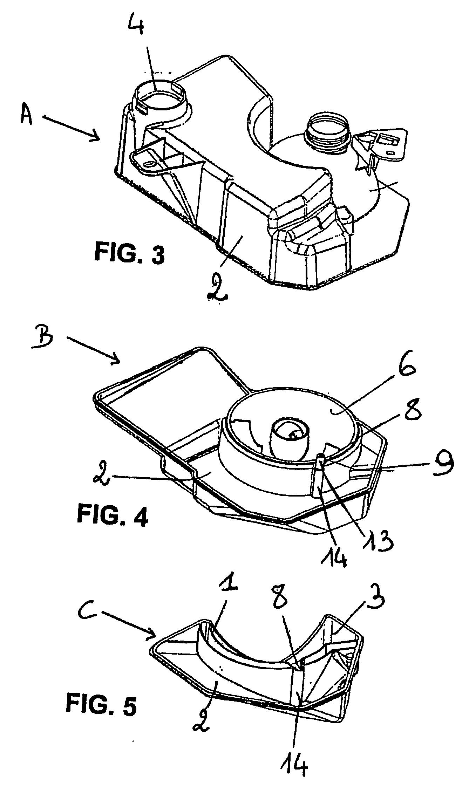

La figure 3 représente une vue partielle en perspective prise de dessus de la pièce supérieure du réservoir ;
La figure 4 représente une vue partielle en perspective prise de dessus de la pièce intermédiaire du réservoir ;
La figure 5 représente une vue partielle en perspective prise de dessus de la pièce inférieure du réservoir ;

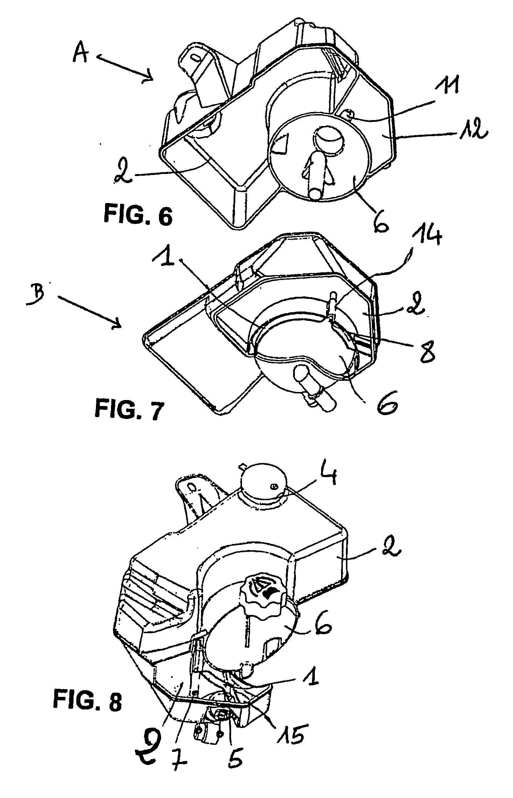

La figure 6 représente une vue partielle en perspective prise de dessous de la pièce supérieure du réservoir ;
La figure 7 représente une vue partielle en perspective prise de dessous de la pièce intermédiaire du réservoir ;
La figure 8 représente une vue partielle en perspective du réservoir dont la moitié de la boîte de dégazage et une partie des pièces supérieure et intermédiaire ont été omises pour permettre une visualisation en perspective de l'intérieur du réservoir à l'état assemblé desdites pièces.

Comme mentionné ci-dessus, l'invention a pour objet un réservoir de liquide de lavage pour véhicule automobile, ce liquide de lavage, usuellement de l'eau éventuellement mélangée avec un additif approprié, étant plus particulièrement destiné à être projeté ou pulvérisé sur les vitres du pare brise avant de la lunette arrière ou sur les projecteurs ou autre paroi vitrée du véhicule, au moyen de gicleurs ou analogues disposés en regard des balais d'essuie glace équipant la surface à nettoyer, ce liquide de lavage étant chauffé à partir de calories provenant de la boîte de dégazage du circuit de refroidissement du moteur du véhicule.

Ce réservoir est pourvu d'une cloison 1 d'extension verticale divisant le réservoir en une première chambre 2, dite froide, comportant dans sa partie supérieure un orifice de remplissage 4 du liquide fermé de manière étanche par un bouchon, et une deuxième chambre 3 dite chaude de volume inférieur comportant dans sa partie inférieure au moins un orifice de pompage 5 par le ou lesquels une ou plusieurs pompes, non représentées, alimentent en liquide de lavage des gicleurs lave-vitres ou des gicleurs lave-projecteurs du véhicule. La deuxième chambre 3 présente une paroi commune à un corps de réchauffage 6, cette paroi formant surface d'échange thermique entre la deuxième chambre 3 et le corps de réchauffage 6.

Dans les exemples représentés, le corps de réchauffage 6 comporte une boîte de dégazage 6 faisant partie d'un circuit de refroidissement du moteur du véhicule automobile. Cette boîte de dégazage, usuellement à profil sphérique, comporte de manière en soi connue, un bouchon amovible pour permettre le remplissage du circuit de refroidissement en liquide approprié à cet usage. Ce liquide est généralement constitué par de l'eau à laquelle est ajouté, en proportion convenable, un additif en lui-même connu dans la technique, propre à réduire la tension superficielle du liquide et à limiter sa vaporisation lors du fonctionnement du moteur.

La boîte de dégazage 6 assure la séparation entre le liquide et sa vapeur ou d'autres produits gazeux, voire l'air présent ou introduit dans le circuit de refroidissement lors de son remplissage, la température à l'intérieur de cette boîte étant plus ou moins rapidement amenée, dès que le moteur fonctionne, à une valeur généralement comprise entre 60 et 90°, selon le véhicule concerné.

Cette boîte de dégazage comporte de façon classique une soupape de sécurité non représentée. Le circuit est muni d'un orifice de trop plein limitant la quantité de liquide enfermé dans celui-ci à l'occasion de sa mise à niveau initiale ou de son ajustement ultérieur.

Le détail du reste du circuit de refroidissement du véhicule automobile, en particulier, de la tubulure de circulation dans la culasse du moteur et de la liaison avec le radiateur n'est pas fourni dans la mesure où il ne se rapporte pas directement à l'invention.

La deuxième chambre 3 du réservoir s'étend au moins partiellement autour dudit corps de réchauffage 6 de manière à assurer le réchauffage du liquide contenu dans ladite deuxième chambre 3. Grâce à cette disposition, seul le contenu de la deuxième chambre 3, ce qui représente un volume réduit par rapport à celui de la première chambre 2, est soumis à un réchauffage. Dans les exemples représentés, le corps de réchauffage 6 formé par la boîte de dégazage 6 affecte une forme sphérique.

Ces première et deuxième chambres 2, 3 communiquent l'une avec l'autre par un orifice de communication 7 dans la partie inférieure de ladite cloison 1 afin de permettre le remplissage de la deuxième chambre 3 à partir de la première chambre 2. Cet orifice de communication 7 entre lesdites chambres est de préférence calibré pour limiter les échanges thermiques entre lesdites chambres. Cet orifice assure l'alimentation de la deuxième chambre 3 en fluide de lavage non chauffé depuis la première chambre 2. La première chambre 2 constitue ainsi l'équivalent d'une réserve de liquide de lavage non chauffé pour la deuxième chambre 3 dont le volume est généralement compris entre 20 et 200 cc.

De manière caractéristique à l'invention les première et deuxième chambres 2, 3 communiquent en outre l'une avec l'autre par un passage d'air 8 prévu à la partie supérieure de la deuxième chambre 3. Ce passage d'air 8 permet l'échappement d'air de la deuxième chambre 3 vers la première chambre 2 lors du remplissage du réservoir.

Dans les exemples représentés, ce passage d'air défini par un canal 8, est associé à des moyens d'obstruction 10 permettant d'empêcher la circulation de liquide de la première chambre 2 vers la deuxième chambre 3 par ledit canal 8. L'absence de circulation de liquide permet d'une part, à nouveau, de maintenir une température élevée du liquide de lavage dans la deuxième chambre 3, d'autre part, de conformer la première chambre avec un niveau maximal de remplissage supérieur au niveau de remplissage de la deuxième chambre sans risque de circulation de fluide entre lesdites chambres. La première chambre 2 présente ainsi dans les exemples représentés, une partie de son volume qui est formée dans la partie supérieure du réservoir alors que la deuxième chambre 3 est essentiellement formée dans la partie inférieure du réservoir.

Dans un premier mode de réalisation, conforme à celui représenté aux figures, les moyens d'obstruction comportent un piège à air 10 entourant le débouché du canal 8 dans la première chambre 2. Ce piège à air, ici de type chicane, comprend une cavité 11 prévue dans une paroi interne 12 délimitant la première chambre vers le haut, et dans laquelle débouche ledit canal 8. Cette paroi interne 12 forme le plafond de la première chambre. Il doit être noté qu'en cas de gel du liquide de lavage, par exemple en l'absence d'antigel, le piège à air peut être utilisé comme volume d'expansion du liquide de lavage, lors de la solidification dudit liquide.

En d'autres termes, la cavité 11 forme un volume d'expansion du liquide de lavage commun aux première et deuxième chambres 2, 3, ce volume étant disposé au sommet de la cloison 1 séparant les première et deuxième chambres 2, 3.

La deuxième chambre 3 est, quant à elle, entièrement fermée vers le haut par la cloison 1 et par la partie inférieure du corps de réchauffage 6. Le passage 8 d'air, défini par un canal 8, s'étend par ladite cloison 1 et débouche dans la première chambre 2 par un orifice d'évacuation 9 dirigée vers le haut.

Le canal 8 est, à sa partie supérieure, défini par un élément tubulaire 13 formant ledit orifice d'évacuation 9 et débouchant près du fond de la cavité 11. Le canal 8 débouche ainsi à la manière d'une cheminée dans la cavité 11. Cette cheminée joue le rôle de cheminée d'évacuation de l'air éventuellement présent ou introduit dans ladite deuxième chambre 3, tandis que la cavité 11 dans laquelle le canal 8 débouche forme l'équivalent d'une chicane.

Dans les exemples représentés, le canal 8 est formé dans une nervure sensiblement verticale 14 faisant saillie sur la surface de ladite cloison 1 du côté de la première chambre 2.

Dans les exemples représentés, la cloison 1 séparant lesdites première et deuxième chambres 2, 3 est à double paroi et la nervure 14 forme une interruption à simple paroi. La présence d'une cloison à double paroi permet d'assurer une meilleure isolation thermique du contenu de la deuxième chambre 3.

L'orifice de communication 7, entre première et deuxième chambres autorisant le remplissage de la deuxième chambre à partir de la première chambre, est prévu sur la partie inférieure de la nervure 14. Cet orifice de communication 7 est surélevé par rapport à une paroi formant fond 15 du réservoir pour éviter un colmatage dudit orifice par les dépôts accumulés au fond dudit réservoir.

Généralement, ce réservoir comporte un moyen déflecteur 16 disposé dans la deuxième chambre 3 devant l'orifice de communication 7, ce déflecteur 16 étant apte à dévier le liquide entrant par rapport à l'orifice de pompage 5. Ainsi, lors d'une expulsion du fluide de la deuxième chambre 3, le liquide aspiré n'est pas celui directement issu de la première chambre 2.

Dans un autre mode de réalisation non représenté, les moyens d'obstruction du passage d'air 8 entre première et deuxième chambres 2, 3 comportent une membrane perméable à l'air et imperméable au liquide. Cette membrane peut être logée dans la cloison séparatrice des première et deuxième chambres lorsque le passage d'air 8 est ménagé directement dans ladite cloison 1. Cette membrane perméable à l'air et imperméable au liquide peut également, dans le cas d'une configuration conforme à celle représentée aux figures dans laquelle le passage d'air est défini par un canal 8, être disposée à l'extrémité libre dudit canal.

Dans un autre mode de réalisation non représenté, le passage d'air 8 est associé à des moyens d'obstruction qui permettent d'empêcher la circulation du liquide de ladite première chambre 2 vers ladite deuxième chambre 3, ces moyens d'obstruction comportant un organe mobile tel qu'un clapet, une bille, un flotteur ou similaire. Cet organe mobile est généralement disposé dans la deuxième chambre 3 et présente de préférence un déplacement asservi au niveau de fluide à l'intérieur de la deuxième chambre 3.

Il est à noter que, grâce à cette conception, les vapeurs d'alcool résultant du chauffage de l'alcool contenu dans le liquide de lavage de la deuxième chambre sont condensées rapidement dans le volume formé par la première chambre, de sorte que toute fuite d'alcool vers l'extérieur du réservoir est empêchée.

Ces dispositions permettent de conformer la première chambre 2 de sorte que son niveau de remplissage maximal soit au-dessus du niveau de la deuxième chambre 3 sans risque de circulation non contrôlée du liquide de lavage entre ces deux chambres Dans les exemples représentés, le réservoir de liquide est formé de trois pièces superposées, représentées en A, B et C aux figures, moulées par injection. Ces pièces constituent respectivement une pièce supérieure A, une pièce intermédiaire B et une pièce inférieure C assemblées les unes aux autres pas des soudures continues formant des moyens d'étanchéité uniques entre lesdites pièces superposées. Grâce à la conception retenue, une garniture d'étanchéité supplémentaire, tel qu'un joint, n'est pas nécessaire. Ainsi, chambres et corps de réchauffage sont réalisés uniquement à partir de trois pièces.

On note que les trois pièces superposées A, B, C délimitent ensemble la première chambre 2. Les pièces intermédiaire et inférieure B, C délimitent, avec la paroi commune à la deuxième chambre 3 et à la boîte de dégazage 6, la deuxième chambre 3. Les pièces supérieure et intermédiaire A, B forment ensemble la boîte de dégazage 6 qui affecte ici la forme d'une boîte sphérique. Les pièces intermédiaire et inférieure B, C comportent quant à elle la cloison 1 formée par une double paroi d'isolation, cette cloison 1 de séparation des première et deuxième chambres entre elles comportant l'orifice de communication 7 entre lesdites chambres.

La pièce supérieure A affecte donc la forme d'un couvercle qui comporte à côté de la demi-sphère formant la partie supérieure de la boîte 6 de dégazage une cavité formant la partie supérieure de la première chambre 1, la face du dessus du couvercle étant munie de la cavité 11 formant piège à air. La pièce intermédiaire B destinée à être raccordée par un plan de joint à la pièce A comporte la demi-sphère inférieure de la boîte de dégazage, la paroi commune à la demi-sphère et à la deuxième chambre, la partie supérieure de la cloison séparatrice entre première et deuxième chambres avec la partie supérieure du canal 8 et la zone médiane de la première chambre 2. Enfin la pièce inférieure C délimite les fonds des première et deuxième chambres 2, 3 et comporte la partie inférieure de la paroi séparatrice entre lesdites chambres.

Du fait de cette conception, la boîte de dégazage 6 peut comporter au niveau de sa partie inférieure une tubulure de raccordement au circuit de liquide de refroidissement du moteur qui n'interfère en rien avec le reste du réservoir. La paroi commune entre boîte de dégazage 6 et deuxième chambre 3 est de surface suffisante pour assurer une élévation de température rapide et un maintien de ladite température à l'intérieur de la deuxième chambre 3.

## Revendications

1. Réservoir de liquide de lavage pour véhicule automobile, le réservoir étant pourvu d'une cloison (1) d'extension verticale divisant le réservoir en une première chambre (2) comportant dans sa partie supérieure au moins un orifice de remplissage (4) du liquide, et une deuxième chambre (3) comportant dans sa partie inférieure au moins un orifice de pompage (5), ladite deuxième chambre (3), présentant une paroi commune à un corps de réchauffage (6), ladite deuxième chambre (3) s'étendant au moins partiellement autour dudit corps de réchauffage (6) de manière à assurer le réchauffage du liquide contenu dans ladite deuxième chambre (3), lesdites première et deuxième chambres (2, 3) communiquant l'une avec l'autre par un orifice de communication (7) dans la partie inférieure de ladite cloison (1) afin de permettre le remplissage de ladite deuxième chambre (3) à partir de ladite première chambre (2), **caractérisé par le fait que** la deuxième chambre (3) présente un volume inférieur à celui de la première chambre (2) et en ce que lesdites première et deuxième chambres (2, 3) communiquent en outre l'une avec l'autre par un passage d'air (8) prévu à la partie supérieure de ladite deuxième chambre (3) de manière à permettre l'échappement d'air de celle-ci vers ladite première chambre (2) lors du remplissage du réservoir.

2. Réservoir selon la revendication 1,
**caractérisé par le fait que** le passage (8) d'air, défini par un canal (8), est associé à des moyens d'obstruction (10) permettant d'empêcher la circulation de liquide de ladite première chambre (2) vers ladite deuxième chambre (3) par ledit canal (8).

3. Réservoir selon la revendication 2,
**caractérisé par le fait que** lesdits moyens d'obstruction comportent un piège à air (10) entourant le débouché du canal (8) dans ladite première chambre (2).

4. Réservoir selon la revendication 3,
**caractérisé par le fait que** ledit piège à air comprend une cavité (11) prévue dans une paroi interne (12) délimitant ladite première chambre vers le haut, et dans laquelle débouche ledit canal (8).

5. Réservoir selon la revendication 4,
**caractérisé en ce que** la cavité (11) forme un volume d'expansion du liquide de lavage commun aux première et deuxième chambres (2, 3), ce volume étant disposé au sommet de la cloison (1) séparant les première et deuxième chambres (2, 3).

6. Réservoir selon l'une des revendications 2 à 5,
**caractérisé par le fait que** ladite deuxième chambre (3) est entièrement fermée vers le haut par ladite cloison (1) et par la partie inférieure dudit corps de réchauffage (6), et que ledit passage (8) d'air, défini par un canal (8), s'étend par ladite cloison et débouche dans ladite première chambre (2) par un orifice d'évacuation (9) dirigée vers le haut.

7. Réservoir selon la revendication 6, du type dans lequel les moyens (10) d'obturation comportent un piège à air comprenant une cavité (11),
**caractérisé par le fait que** ledit canal (8) est, à sa partie supérieure, défini par un élément tubulaire (13) formant ledit orifice d'évacuation (9) et débouchant près du fond de ladite cavité (11).

8. Réservoir selon l'une quelconque des revendications 2 à 7,
**caractérisé par le fait que** ledit canal (8) est formé dans une nervure sensiblement verticale (14) faisant saillie sur la surface de ladite cloison (1) du côté de ladite première chambre (2).

9. Réservoir selon la revendication 8,
**caractérisé par le fait que** ladite cloison (1) est à double paroi et que ladite nervure (14) forme une interruption à simple paroi.

10. Réservoir selon la revendication 8 ou 9,
**caractérisé par le fait que** ledit orifice de communication (7) est prévu sur la partie inférieure de ladite nervure (14).

11. Réservoir selon la revendication 10,
**caractérisé par le fait que** ledit orifice de communication (7) est surélevé par rapport à une paroi formant fond (15) du réservoir.

12. Réservoir selon la revendication 1,
**caractérisé par le fait que** le passage (8) d'air est associé à des moyens d'obstruction permettant d'empêcher la circulation de liquide de ladite première chambre (2) vers ladite deuxième chambre (3), lesdits moyens d'obstruction comportant une membrane perméable à l'air et imperméable au liquide.

13. Réservoir selon la revendication 1,
**caractérisé par le fait que** le passage (8) d'air est associé à des moyens d'obstruction permettant d'empêcher la circulation de liquide de ladite première chambre (2) vers ladite deuxième chambre (3), les moyens d'obstruction comportant un organe mobile tel que clapet, bille, flotteur.

14. Réservoir selon l'une quelconque des revendications précédentes, **caractérisé par le fait qu'**il comporte un moyen déflecteur (16) disposé dans ladite deuxième chambre (3) devant ledit orifice de communication (7) et apte à dévier le liquide entrant par rapport audit orifice de pompage (5).

15. Réservoir selon l'une des revendications 1 à 14,
**caractérisé par le fait que** ledit corps de réchauffage comporte une boîte de dégazage (6) faisant partie d'un circuit de refroidissement du moteur du véhicule automobile.

16. Réservoir selon l'une des revendications 1 à 14,
**caractérisé que** le réservoir est formé de trois pièces superposées (A, B, C) moulées par injection et constituant une pièce supérieure (A), une pièce intermédiaire (B), respectivement une pièce inférieure (C) assemblées les unes aux autres par des soudures continues formant des moyens d'étanchéités uniques entre lesdites pièces superposées.

## Claims

1. A washing liquid tank for a motor vehicle, the tank being provided with a vertically extending partition (1) dividing the tank into a first chamber (2) including in its upper portion at least one filling orifice (4) for the liquid, and a second chamber (3), including in its lower portion at least a pumping orifice (5), said second chamber (3), having a wall common to a heating-up body (6), said second chamber (3) extending at least partially around said heating-up body (6) so as to ensure heating-up of the liquid contained in said second chamber (3), said first and second chambers (2, 3) communicating with each other through a communication orifice (7) in the lower portion of said partition (1) in order to allow the filling of said second chamber (3) from said first chamber (2), **characterized by** the fact that the second chamber (3) has a smaller volume than the one of the first chamber (2) and in that said first and second chambers (2, 3) further communicate with each other through an air passage (8) provided at the upper portion of said second chamber (3) so as to allow air to escape from the latter towards said first chamber (2) during the filling of the tank.

2. The tank according to claim 1,
**characterized by** the fact that the air passage (8) defined by a channel (8) is associated with obstruction means (10) allowing the flow of the liquid from said first chamber (2) towards said second chamber (3) through said channel (8) to be prevented.

3. The tank according to claim 2,
**characterized by** the fact that said obstruction means include an air trap (10) surrounding the mouth of the channel (8) in said first chamber (2).

4. The tank according to claim 3,
**characterized by** the fact that said air trap comprises a cavity (11) provided in an internal wall (12) delimiting said first chamber upwards, and into which opens out said channel (8).

5. The tank according to claim 4,
**characterized in that** the cavity (11) forms a volume for expansion of the washing liquid common to the first and second chambers (2, 3), this volume being positioned at the top of the partition (1) separating the first and second chambers (2, 3).

6. The tank according to any of claims 2 to 5,
**characterized by** the fact that said second chamber (3) is entirely closed at the top by said partition (1) and by the lower portion of said heating-up body (6), and that said air passage (8), defined by a channel (8), extends through said partition and opens out into said first chamber (2) through a discharge orifice (9) directed upwards.

7. The tank according to claim 6, of the type in which the obstruction means (10) include an air trap comprising a cavity (11),
**characterized by** the fact that said channel (8) is at its upper portion, defined by a tubular element (13) forming said discharge orifice (9) and opening out close to the bottom of said cavity (11).

8. The tank according to any of claims 2 to 7,
**characterized by** the fact that said channel (8) is formed in a substantially vertical rib (14) protruding on the surface of said partition (1) on the side of said first chamber (2).

9. The tank according to claim 8,
**characterized by** the fact that said partition (1) is double-walled and that said rib (14) forms an interruption with a simple wall.

10. The tank according to claim 8 or 9,
**characterized by** the fact that said communication orifice (7) is provided on the lower portion of said rib (14).

11. The tank according to claim 10,
**characterized by** the fact that said communication orifice (7) is raised relatively to a wall forming a bottom (15) of the tank.

12. The tank according to claim 1,
**characterized by** the fact that the air passage (8) is associated with obstruction means with which the flow of liquid from said first chamber (2) towards said second chamber (3) may be prevented, said obstruction means including a membrane permeable to air and impermeable to the liquid.

13. The tank according to claim 1,
**characterized by** that the air passage (8) is associated with obstruction means with which the flow of liquid from said first chamber (2) towards said second chamber (3) may be prevented, the obstruction means including a mobile member such as a flap gate, a ball, a float.

14. The tank according to any of the preceding claims,
**characterized by** the fact that it includes a deflecting means (16) positioned in said second chamber (3) in front of said communication orifice (7) and capable of deflecting the inflowing liquid with respect to said pumping orifice (5).

15. The tank according to any of claims 1 to 14,
**characterized by** the fact that said heating-up body includes a degassing box (6) being part of a cooling circuit of the engine of the motor vehicle.

16. The tank according to any of claims 1 to 14,
**characterized in that** the tank is formed with three superposed parts (A, B, C) molded by injection and forming an upper part (A), an intermediate part (B), a lower part (C), respectively, assembled together by continuous welds forming single sealing means between said superposed parts.

## Patentansprüche

1. Behälter für Waschflüssigkeit für ein Kraftfahrzeug, wobei der Behälter mit einer sich vertikal erstreckenden Zwischenwand (1) ausgestattet ist, die den Behälter in eine erste Kammer (2) unterteilt, die in ihrem oberen Abschnitt mindestens eine Flüssigkeits-Einfüllöffnung (4) aufweist, und eine zweite Kammer (3), die in ihrem unteren Abschnitt mindestens eine Pumpöffnung (5) aufweist, wobei die zweite Kammer (3) eine mit einem Heizkörper (6) gemeinsame Wand aufweist, wobei sich die zweite Kammer (3) mindestens teilweise um den Heizkörper (6) derart erstreckt, um das Erwärmen der in der zweiten Kammer (3) enthaltenen Flüssigkeit zu gewährleisten, wobei die erste und die zweite Kammer (2, 3) miteinander über eine Kommunikationsöffnung (7) im unteren Abschnitt der Zwischenwand (1) kommunizieren, um das Befüllen der zweiten Kammer (3) aus der ersten Kammer (2) zu erlauben,
**dadurch gekennzeichnet, dass** die zweite Kammer (3) ein kleineres Volumen als die erste Kammer (2) aufweist und dass die erste und zweite Kammer (2, 3) außerdem über eine Luftpassage (8) miteinander kommunizieren, die im oberen Abschnitt der zweiten Kammer (3) derart vorgesehen ist, um das Entweichen von Luft aus dieser in die erste Kammer (2) beim Befüllen des Behälters zu erlauben.

2. Behälter nach Anspruch 1,
**dadurch gekennzeichnet, dass** die Luftpassage (8), die von einem Kanal (8) definiert wird, mit Verschlussmitteln (10) verbunden ist, die es erlauben, die Zirkulation von Flüssigkeit von der ersten Kammer (2) in die zweite Kammer (3) über den Kanal (8) zu verhindern.

3. Behälter nach Anspruch 2,
**dadurch gekennzeichnet, dass** die Verschlussmittel eine die Mündung des Kanals (8) in die erste Kammer (2) umgebende Luftfalle (10) aufweisen.

4. Behälter nach Anspruch 3,
**dadurch gekennzeichnet, dass** die Luftfalle eine Vertiefung (11) aufweist, die in einer Innenwand (12) vorgesehen ist, die die erste Kammer nach oben begrenzt und in die der Kanal (8) mündet.

5. Behälter nach Anspruch 4,
**dadurch gekennzeichnet, dass** die Vertiefung (11) ein für die erste und zweite Kammer (2, 3) gemeinsames Ausdehnungsvolumen der Waschflüssigkeit bildet, wobei dieses Volumen auf dem Gipfel der die erste und zweite Kammer (2, 3) trennenden Zwischenwand (1) angeordnet ist.

6. Behälter nach einem der Ansprüche 2 bis 5,
**dadurch gekennzeichnet, dass** die zweite Kammer (3) von der Zwischenwand (1) und von dem unteren Abschnitt des Heizkörpers (6) nach oben vollständig verschlossen wird, und dass sich die von einem Kanal (8) definierte Luftpassage (8) durch die Zwischenwand erstreckt und durch eine nach oben gerichtete Auslassöffnung (9) in die erste Kammer (2) mündet.

7. Behälter nach Anspruch 6 der Bauart, bei der die Verschlussmittel (10) eine Luftfalle mit einer Vertiefung (11) aufweisen,
**dadurch gekennzeichnet, dass** der Kanal (8) in seinem oberen Bereich von einem röhrenförmigen Element (13) definiert wird, das die Ablassöffnung (9) bildet und in der Nähe des Bodens der Vertiefung (11) mündet.

8. Behälter nach einem der Ansprüche 2 bis 7,
**dadurch gekennzeichnet, dass** der Kanal (8) in einer etwa vertikalen Rippe (14) ausgebildet ist, die über die Fläche der Zwischenwand (1) auf der Seite der ersten Kammer (2) hervorsteht.

9. Behälter nach Anspruch 8,
**dadurch gekennzeichnet, dass** die Zwischenwand (1) doppelwandig ist und dass die Rippe (14) eine einwandige Unterbrechung bildet.

10. Behälter nach Anspruch 8 oder 9,
**dadurch gekennzeichnet, dass** die Kommunikationsöffnung (7) im unteren Abschnitt der Rippe (14) vorgesehen ist.

11. Behälter nach Anspruch 10,
**dadurch gekennzeichnet, dass** die Kommunikationsöffnung (7) im Verhältnis zu einer den Boden (15) des Behälters bildenden Wand hochstehend ist.

12. Behälter nach Anspruch 1,
**dadurch gekennzeichnet, dass** die Luftpassage (8) mit Verschlussmitteln verbunden ist, die es erlauben, die Zirkulation von Flüssigkeit von der ersten Kammer (2) in die zweite Kammer (3) zu verhindern, wobei die Verschlussmittel eine Membran aufweisen, die für Luft durchlässig und für Flüssigkeit undurchlässig ist.

13. Behälter nach Anspruch 1,
**dadurch gekennzeichnet, dass** die Luftpassage (8) mit Verschlussmitteln verbunden ist, die es erlauben, die Zirkulation von Flüssigkeit von der ersten Kammer (2) in die zweite Kammer (3) zu verhindern, wobei die Verschlussmittel ein bewegliches Organ wie Ventil, Kugel, Schwimmer aufweisen.

14. Behälter nach einem der vorangehenden Ansprüche,
**dadurch gekennzeichnet, dass** er ein in der zweiten Kammer (3) vor der Kommunikationsöffnung (7) angeordnetes Ablenkmittel (16) aufweist, das imstande ist, die eintretende Flüssigkeit im Verhältnis zur Pumpöffnung (5) abzulenken.

15. Behälter nach einem der Ansprüche 1 bis 14,
**dadurch gekennzeichnet, dass** der Heizkörper einen Entlüftungsbehälter (6) aufweist, der Bestandteil eines Kühlkreises des Motors des Kraftfahrzeugs ist.

16. Behälter nach einem der Ansprüche 1 bis 14,
**dadurch gekennzeichnet, dass** der Behälter von zwei übereinanderstehenden spritzgegossenen Formteilen (A, B, C) gebildet wird, die ein oberes Teil (A), ein mittleres Teil (B) beziehungsweise ein unteres Teil (C) darstellen, die miteinander durch durchgehende Schweißnähte verbunden sind, die einzige Dichtigkeitsmittel zwischen den übereinanderstehenden Teilen bilden.
